# EUROPEAN PATENT SPECIFICATION

(11) **EP 0 713 536 B1**
(45) Date of publication and mention of the grant of the patent: **27.05.1998**
(21) Application number: 94922993.4
(22) Date of filing: 03.08.1994
(51) Int. Cl.: C22B 7/00, C22B 3/26, C22B 3/38, C22B 3/42, C22B 3/44, C22B 30/00, C22B 3/00

(54) **A PROCESS FOR RECOVERING METALS**
VERFAHREN ZUR GEWINNUNG VON METALLEN
PROCEDE DE RECUPERATION DE METAUX

(30) Priority: 11.08.1993 GB 9316641
(43) Date of publication of application: 29.05.1996
(73) Proprietor: ZENECA LIMITED, London W1Y 6LN (GB)
(72) Inventor: CUPERTINO, Domenico, Carlo, Wirral Merseyside L61 5XU (GB); TASKER, Peter, Anthony, Oldham Lancashire OL3 5AL (GB)
(74) Representative: Revell, Christopher
(86) International application number: GB9401702
(87) International publication number: WO9504835

(56) References cited:
- EP-A- 0 562 709
- US-A- 3 607 007
- US-A- 4 272 492
- US-A- 4 409 189
- US-A- 4 500 498

## Description

This invention relates to a chemical process and more particularly to a method for the recovery of metals from organic complexes thereof.

The use of organic extractants in the hydrometallurgical recovery of metals from metal ores has been practised commercially for a number of years. In general, the technique involves contacting an aqueous solution of metal salt, obtained for example by treating the crushed ore with acid, with an organic extractant which may be dissolved in a water-immiscible organic solvent or deposited on a porous material or in the form of a chelating resin, to extract the metal from the aqueous solution in the form of a complex of the metal and the extractant.

Since the naturally-occurring ores of valuable metals often contain other less desirable elements, it is necessary to employ an extractant which extracts either the valuable metal or the contaminant elements in a selective manner. An example of a process for the selective solvent extraction of a valuable metal such as copper can be found'in GB-A-1421766 whilst the selective extraction of contaminant elements such as antimony and bismuth from solutions of copper salts has been described in, for example, DE-A-2515862 and US-A-4834951. The use of chelating resins for the selective removal of antimony and/or bismuth from copper electrolytes has been described, for example, in JP-A-59-157294, JP-A-59-162108 and JP-A-61-110800.

When the metal complex, in solution or solid form, has been separated from the original aqueous solution, it is then necessary to break down that complex so as to recover the metal and regenerate the extractant for recycling. In the process of the aforementioned GB-A-1421766, the copper complex is broken down by contacting the organic phase with a strongly acidic solution containing, for example, 200 grams of sulphuric acid per litre. DE-A-2515862 describes treating the organic phase with a strongly acidic solution and/or with an aqueous solution of a complex-forming hydroxycarboxylic or dicarboxylic acid such as tartaric, citric or oxalic acid to liberate the extractant and the antimony and/or bismuth whilst in the process of US-A-4834951 the contaminant elements present in the organic phase are precipitated as sulphides. For the recovery of antimony absorbed on a chelating resin, elution with 4-6 molar hydrochloric acid has been reported.

In the processes where a strongly acidic stripping solution is used, the amount of acid is usually in large excess over that which is required by the stoichiometry of the ion exchange reaction in order to displace the chemical equilibrium so as to liberate most of the metal. Thus, US-A-4 235 713 describes a three stage process for the removal of iron from an organic phase containing di-2-ethylhexyl phosphoric acid, the first stage comprising treating the organic phase with an acidic solution containing chloride ions. Solutions containing hydrochloric acid at a concentration between 4 and 6 molar are particularly recommended, the lowest acid concentration used in the examples having almost two molar above the stochoimetric requirement for stripping the iron. It has now been found that such metals can be recovered from their complexes in a facile manner by treating the complex with a weakly acid strip solution containing ammonium chloride with a high concentration of chloride ion. By a "weakly acid strip solution" is meant a solution containing only a small amount of acid above that required by the stoichiometry of the stripping reaction.

Accordingly, the invention provides a method for the recovery of a metal selected from the group consisting of antimony, bismuth, cadmium, copper, tin and zinc from an organic complex thereof, said method comprising treating the complex with a weakly acid aqueous solution of ammonium chloride having a chloride content of at least 4 molar and an acid strength of up to 0.5 molar above the stoichiometric requirement for stripping the metal whereby said complex is decomposed and metal ions are transferred to the aqueous solution.

A particular advantage of the method of the invention is that the metal is obtained in weakly acid aqueous solution so that it can be precipitated, for example as the hydroxide, oxide or oxychloride, by neutralisation of the small amount of acid with a small amount of alkali or base. It is particularly convenient to use ammonia as the base so that further amounts of ammonium chloride are produced in the stripping solution. The mother liquor from the precipitation can then be re-adjusted to weak acidity and re-used for further stripping cycles.

The organic complex may be treated in the form of a solution thereof in a water-immiscible organic solvent.

Thus, in one aspect, the invention provides a method for the recovery of a metal from a solution in a water-immiscible organic solvent of an organic complex of said metal by treating the solution with a weakly acid aqueous solution of ammonium chloride having a chloride content of at least 4 molar whereby said complex is decomposed and metal ions are transferred to the aqueous solution.

The organic complex dissolved in the water-immiscible organic solvent will generally have been formed by extracting an aqueous solution of metal salt with a solution of organic extractant in the water-immiscible organic solvent. Suitable extractants have been fully described in the prior art (for example by M.J.Hudson, Hydrometallurgy, 9(1982), 149-168) and include all those organic ligands which function via a metal-proton exchange equilibrium (and are usually referred to as ion exchangers) such as alpha-hydroxyoximes, β-diketones, 8-sulphonamidoquinolines, hydroxamic acids, carboxylic acids, esters of phosphoric, thiophosphoric, phosphonic, phosphonous, phosphinic and phosphinous acids and the like.

An especially useful class of extractants comprises organophosphorus compounds of the formula: 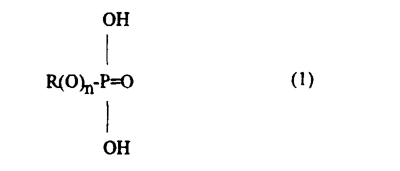 wherein R represents a branched alkyl radical containing at least 12, preferably at least 16, carbon atoms and which may optionally carry one or more substituents which are inert under the extraction conditions, and n is 0 or 1.

The compounds of Formula I are thus (when n=0) alkylphosphonic acids or (when n=1) mono-alkyl esters of phosphoric acid, the latter being preferred. In some cases, it may be advantageous to use a mixture of compounds of Formula I or, for example, a mixture of a mono-alkyl ester of phosphoric acid, as defined in Formula I, and the corresponding di-alkyl ester.

Typical branched alkyl radicals which may be represented by R in the compounds of Formula I contain from 12 to 40, preferably from 12 to 30 and more preferably from 16 to 24 carbon atoms.

Especially preferred branched alkyl radicals which may be represented by R in the compounds of Formula I are radicals derived from Guerbet alcohols, that is to say radicals of the formula: 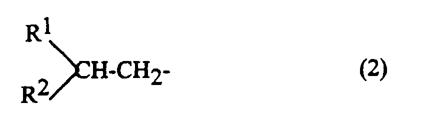 wherein R¹ and R² are straight-chain or branched alkyl radicals which together contain at least 14 carbon atoms and wherein R¹, in general, contains 2 more carbon atoms than R². Preferred radicals of Formula II include radicals wherein R¹ is nonyl and R² is heptyl, especially the 2-(1,3,3-trimethylbutyl)-5,7,7-trimethyloctyl radical of the formula: 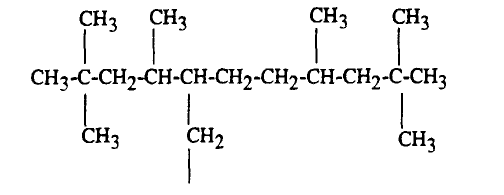 Other useful branched alkyl radicals which may be represented by R in the compounds of Formula I are derived from mixtures of higher alcohols of Formula II wherein R¹ and R² do not necessarily differ by 2 carbon atoms. Such mixed alcohols (for example ISOFOL 18T marketed by Condea Chemie Gmbh) may be obtained by carrying out a Guerbet condensation on mixtures of different alcohols.

Inert substituents which may be present on the branched alkyl radicals include halogen, especially chlorine and bromine, and alkoxy, especially lower alkoxy such as methoxy and ethoxy.

The compounds of Formula I may be obtained by methods described in the prior art for the production of alkylphosphonic acids and mono-alkyl esters of phosphoric acid.

An organic phase comprising one or more compounds of Formula I may be used, for example, to extract antimony and/or bismuth from an aqueous solution in which either or both of these elements may be present. The use of compounds of Formula I is particularly applicable, however, to the selective extraction of antimony and/or bismuth from the highly acidic solutions which are employed as electrolytes in the electrorefining of non-ferrous metals and in which one or both of said elements are present as contaminants. More particularly, compounds of Formula I are valuable for the selective extraction of antimony and/or bismuth contaminants from the highly acidic tankhouse electrolyte solutions used in copper refining. Typical solutions might contain from 35 to 60 g/l copper, from 0.01 to 0.6 g/l antimony and from 0.01 to 0.5 g/l bismuth and have sulphuric acid strengths of from 145 to 210 g/l.

The concentration of organophosphorus compound of Formula I in the organic solvent may be chosen to suit the particular aqueous solution being extracted. Typical concentrations are from about 0.05 to about 1.0 molar, especially from 0.1 to 0.75 molar. Higher concentrations favour more complete extraction of the impurity metals but may reduce the selectivity with which they are extracted.

The water-immiscible organic solvent containing the metal complex will be a good solvent therefor and will be inert under the processing conditions.

Examples of suitable water-immiscible inert organic solvents include aliphatic, cycloaliphatic and aromatic hydrocarbons, chlorinated hydrocarbons such as trichloroethylene, perchloroethylene and trichloroethane and ethers, or mixtures of such compounds. Preferred solvents are hydrocarbon solvents including high flash point solvents with a high aromatic content such as SOLVESSO 150 and AROMASOL H which consists essentially of a mixture of trimethylbenzenes and is commercially available from Imperial Chemical Industries PLC. Especially preferred on grounds of low toxicity and wide availability are hydrocarbon solvents of low aromatic content such as kerosene, for example ESCAID 100 which is a petroleum distillate comprising 20% aromatics, 56.6% paraffins and 23.4% naphthenes commercially available from Exxon.

Extraction of an aqueous solution of metal salt with a solution of organic extractant in a water-immiscible organic solvent may be carried out using conventional solvent extraction techniques to provide the solution of metal complex in the organic solvent. Typically, the aqueous solution is intimately contacted, in a single stage or in multiple stages, with the organic phase (for example by agitating the two phases together in a suitable vessel) for a time sufficient to allow substantial extraction of the metal from the aqueous solution, the two phases then being separated in any conventional manner. The extraction may be conveniently effected at ambient temperature but somewhat higher or lower temperature may be employed if desired or convenient. If desired, the organic solutions may include modifiers, for example tridecanol, known in the art to improve solubility and/or rate of phase disengagement in solvent extraction processes.

Stripping of the metal values from the organic phase may be effected by contacting said organic phase with the aqueous chloride solution using conventional liquid-liquid extraction techniques, either single stage or multi-stage, followed by a conventional separation. The stripping may be conveniently effected at ambient temperature but somewhat higher or lower temperatures may be employed if desired or convenient.

In a variant of the solvent process, the organic complex is encapsulated within a polymeric film so as to form small spherical particles as described in US-A-4500494 or is present on a porous substrate such as aluminium silicate, magnesium silicate, magnesium-aluminium silicate, aluminium oxide or silica. The complex will generally have been formed by treating the porous substrate with a solution of an organic ligand and then contacting the treated substrate with an aqueous solution of metal salt.

In a further variant, the organic complex is a product of treating an aqueous solution of metal salt with a chelating resin, such resins being known in the art. Thus, the selective removal of bismuth from a copper electrolyte solution containing bismuth, antimony and arsenic using a styrene type strongly basic anion exchange resin (Diaion SA20A available from Mitsubishi Chemical Industries Ltd) has been described in JP-A-59-157294. The use of a phenolic chelating resin (UR-3300) to remove contaminant metal ions from copper electrolyte solutions has been described in JP 59-162108 and the use of a phosphomethylamine type chelating resin to remove antimony and bismuth from copper electrolyte has been described in JP-A-61-110800. Examples of commercially available chelating resins useful for removing antimony and/or bismuth ions from copper electrolytes include Duolite C467 (a resin containing groups cf the formula RCH₂NHCH₂PO₃H₂ wherein R represents a long chain polymer, available from Rohm and Haas S.A.) and Eporous MX-2 (available from Miyoshi Oil and Fat Co Ltd). In other suitable resins, the chelating groups may be, for example, a phosphine, phosphonium, phosphonic acid ester, aminoalkylene phosphate group or the like. Examples of other suitable chelating resins include carboxylic acid types such as Dowex MWC-1 (Dow Chemical Company), sulphonic acid types such as Dowex HCR-W2, Dowex C-350 or Amberlyst 15 (Rohm and Haas), aminocarboxylic acid types such as Purolite A-520 (Purolite International Ltd) and hydroxyquinoline types such as Schering TN 02328.

Stripping of the metal values from the porous substrate or the chelating resin may be effected by eluting the substrate or resin with the aqueous chloride solution in conventional manner.

The metals which may be recovered by the method of the invention include any metal complexed with an organic complexing agent capable of being stripped with aqueous acid. Examples of such metals include copper. The method is particularly effective for those metals which, in addition to the above criterion, form complexes with chloride ion in aqueous solution, for example zinc, cadmium, tin, and, especially, antimony and bismuth.

The weakly acid aqueous solution of ammonium chloride preferably has a chloride content of at least 5M and suitably has an acid strength of from 0.1M to 0.5M above the stoichiometric requirement for stripping the metal, hydrochloric acid being preferred. If desired, the aqueous chloride solution may contain one or more other water soluble chlorides, for example an alkali metal chloride such as sodium chloride and/or an alkaline earth metal chloride such as calcium or magnesium chloride, in addition to the ammonium chloride, the total chloride concentration being at least 4M.

The method of the invention is of particular value for the stripping of antimony and/or bismuth from chelating resins on which they have been absorbed or from solutions of organic complexes of said metals in water-immiscible organic solvents, especially solutions of organic complexes of antimony and/or bismuth with organophosphorus compounds. Typical organophosphorus compounds include the phosphoric acid esters described in DE-A-2515862 and compounds of Formula I.

The antimony and/or bismuth may be recovered from the aqueous chloride-containing phase as oxide, hydroxide and/or oxychloride by neutralising the acid with alkali or ammonia.

The invention is illustrated but not limited by the following Examples.

### Example 1

30g of a commercially available chelating resin, Duolite C467 (ex - Rohm and Haas S.A.), was loaded with antimony and bismuth by contacting the resin with 51 of an aqueous solution containing 0.53g/l of antimony as its sulphate Sb₂(SO₄)₃, 0.46g/l of bismuth as its sulphate Bi₂(SO₄)₃ and 170g/l of sulphuric acid, with vigorous agitation at 20-25°C for 24 hours. The metal-loaded resin was separated and rinsed thoroughly with distilled water to remove traces of the aqueous feed solution.

A 1g portion of the metal-loaded resin was contacted with a 15ml portion of an aqueous strip solution containing 18g/l hydrochloric acid and 236g/l ammonium chloride (HCl 0.5M, NH₄Cl 4.5M). Contact was maintained for 2 hours at 20-25°C after which the strip solution was analysed for metal content and found to contain 2812 ppm of antimony and 2290ppm of bismuth.

### Example 2

An aqueous acidic solution of antimony sulphate and bismuth sulphate was extracted with a 0.1M solution of mono-2-(1,3,3-trimethylbutyl)-5,7,7-trimethyloctyl phosphate in ESCAID 100 solvent to give a loaded organic solution containing antimony at a concentration of 0.48g/l and bismuth at a concentration of 0.27g/l. This organic solution was contacted with an equal volume of the aqueous strip solution described in Example 1. It was found that 97% of the antimony and more than 99% of the bismuth transferred from the organic phase to the aqueous phase.

In a similar trial, a loaded organic solution containing 2.33g/l of antimony and 1.21g/l of bismuth was contacted with an equal volume of the aqueous strip solution. It was found that 98% of the antimony and 99% of the bismuth transferred to the aqueous strip solution. The antimony and bismuth values in the loaded aqueous strip solution were recovered as their solid oxychlorides by neutralising the excess acid present in the solution by the addition of aqueous ammonia.

## Claims

1. A method for the recovery of a metal selected from the group consisting of antimony, bismuth, cadmium, copper, tin and zinc from an organic complex thereof, said method comprising treating the complex with a weakly acid aqueous solution of ammonium chloride having a chloride content of at least 4 molar and an acid strength of up to 0.5 molar above the stoichiometric requirement for stripping the metal whereby said complex is decomposed and metal ions are transferred to the aqueous solution.

2. A method according to claim 1, wherein the metal is selected from the group consisting of antimony, bismuth, cadmium and zinc.

3. A method according to claim 1 or claim 2, which comprises treating a solution of the complex in a water-immiscible organic solvent.

4. A method according to claim 3, wherein the solution of the complex in a water-immiscible organic solvent is a product of extracting an aqueous solution of metal salt with a solution of organic extractant in the water-immiscible organic solvent.

5. A method according to claim 4, wherein the organic extractant comprises an organic ligand which functions via a metal-proton exchange equilibrium.

6. A method according to claim 5, wherein the organic extractant comprises an organophosphorus compound of the formula : 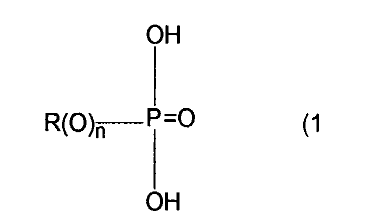 wherein R represents a branched alkyl radical containing at least 12 carbon atoms and which may optionally carry one or more substituents which are inert under the extraction conditions, and n is 0 or 1.

7. A method according to claim 6, wherein R is a branched alkyl radical containing at least 16 carbon atoms.

8. A method according to claim 6 or claim 7, wherein R is a radical of the formula : 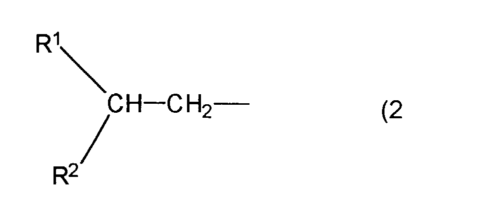 wherein R¹ and R² are straight-chain or branched alkyl radicals which together contain at least 14 carbon atoms and wherein R¹ contains 2 more carbon atoms than R².

9. A method according to claim 8, wherein R is a radical of the formula :

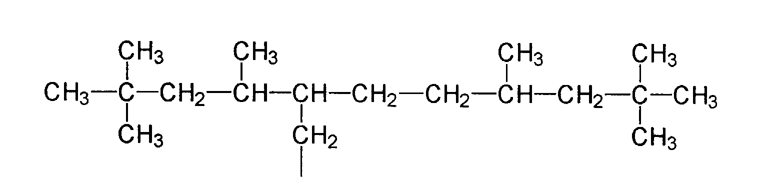

10. A method according to claim 1 or claim 2, wherein the organic complex is a product of treating an aqueous solution of metal salt with a chelating resin.

11. A method according to any one of claims 1 to 10, wherein the weakly acid aqueous solution of ammonium chloride has a chloride content of at least 5 molar.

12. A method according to any one of claims 1 to 11, wherein the organic complex is a complex is a complex of antimony or bismuth.

## Patentansprüche

1. Verfahren zur Wiedergewinnung eines Metalls, ausgewählt aus Antimon, Bismut, Cadmium, Kupfer, Zinn und Zink, aus einem organischen Komplex davon, wobei das Verfahren die Behandlung des Komplexes mit einer schwach sauren wäßrigen Lösung von Ammoniumchlorid mit einem Chlorid-Gehalt von wenigstens 4 molar und einer Säurestärke von bis zu 0,5 molar oberhalb der stöchiometrischen Anforderung für das Austreiben des Metalls umfaßt, wobei der Komplex zersetzt und die Metallionen in die wäßrige Lösung überführt werden.

2. Verfahren gemäß Anspruch 1, worin das Metall ausgewählt ist aus Antimon, Bismut, Cadmium und Zink.

3. Verfahren gemäß Anspruch 1 oder 2, welches die Behandlung einer Lösung des Komplexes in einem mit Wasser nicht mischbaren organischen Lösungsmittel umfaßt.

4. Verfahren gemäß Anspruch 3, worin die Lösung des Komplexes in einem mit Wasser nicht mischbaren organischen Lösungsmittel ein Produkt der Extraktion einer wäßrigen Lösung des Metallsalzes mit einer Lösung des organischen Extraktionsmittels im mit Wasser nicht mischbaren organischen Lösungsmittel ist.

5. Verfahren gemäß Anspruch 4, worin das organische Extraktionsmittel einen organischen Liganden umfaßt, der über ein Metall-Proton-Austauschgleichgewicht wirkt.

6. Verfahren gemäß Anspruch 5, worin das organische Extraktionsmittel eine Organophosphor-Verbindung der Formel: 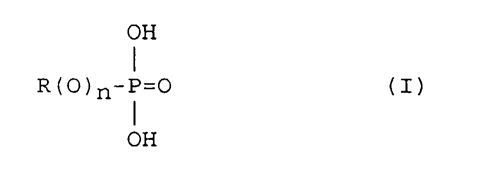 umfaßt, worin R ein verzweigtes Alkyl-Radikal mit wenigstens 12 Kohlenstoffatomen darstellt, das gegebenenfalls ein oder mehrere Substituenten trägt, die unter den Extraktionsbedingungen inert sind, und n 0 oder 1 ist.

7. Verfahren gemäß Anspruch 6, worin R ein verzweigtes Alkyl-Radikal mit wenigstens 16 Kohlenstoffatomen ist.

8. Verfahren gemäß Anspruch 6 oder 7, worin R ein Radikal der Formel: 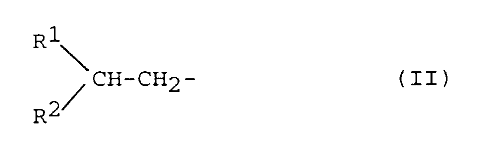 ist, worin R¹ und R² geradkettige oder verzweigte Alkyl-Radikale sind, die zusammen wenigstens 14 Kohlenstoffatome enthalten, und worin R¹ 2 Kohlenstoffatome mehr enthält als R².

9. Verfahren gemäß Anspruch 8, worin R ein Radikal der Formel: 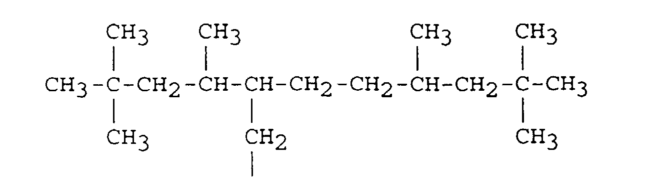 ist.

10. Verfahren gemäß Anspruch 1 oder 2, worin der organische Komplex ein Produkt der Behandlung einer wäßrigen Lösung des Metallsalzes mit einem chelatbildenden Harz ist.

11. Verfahren gemäß einem der Ansprüche 1 bis 10, worin die schwach saure wäßrige Lösung von Ammoniumchlorid einen Chlorid-Gehalt von wenigstens 5 molar hat.

12. Verfahren gemäß einem der Ansprüche 1 bis 11, worin der organische Komplex ein Komplex von Antimon oder Bismut ist.

## Revendications

1. Procédé de récupération d'un métal choisi dans le groupe consistant en l'antimoine, le bismuth, le cadmium, le cuivre, l'étain et le zinc à partir d'un complexe organique du métal, ledit procédé comprenant le traitement du complexe avec une solution aqueuse faiblement acide de chlorure d'ammonium ayant une teneur en chlorure au moins 4 fois molaire et une concentration d'acide pouvant atteindre 0,5 fois molaire au-delà de la condition stoechiométrique pour l'extraction du métal, de sorte que ledit complexe est décomposé et que les ions métalliques sont transférés dans la solution aqueuse.

2. Procédé selon la revendication 1 où le métal est choisi dans le groupe consistant en l'antimoine, le bismuth, le cadmium et le zinc.

3. Procédé selon la revendication 1 ou la revendication 2 qui comprend le traitement d'une solution du complexe dans un solvant organique immiscible à l'eau.

4. Procédé selon la revendication 3 où la solution du complexe dans un solvant organique immiscible à l'eau est un produit d'extraction d'une solution aqueuse de sel métallique avec une solution d'agent d'extraction organique dans le solvant organique immiscible à l'eau.

5. Procédé selon la revendication 4 où l'agent d'extraction organique comprend un ligand organique qui agit par l'intermédiaire d'un équilibre d'échange métal-proton.

6. Procédé selon la revendication 5 où l'agent d'extraction organique comprend un composé organophosphoré de formule : 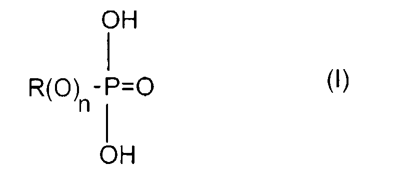 où R représente un radical alkyle ramifié contenant au moins 12 atomes de carbone et qui peut éventuellement porter un ou plusieurs substituants qui sont inertes dans les conditions d'extraction, et n est 0 ou 1.

7. Procédé selon la revendication 6 où R est un radical alkyle ramifié contenant au moins 16 atomes de carbone.

8. Procédé selon la revendication 6 ou la revendication 7 où R est un radical de formule : 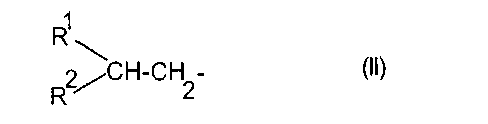 où R¹ et R² sont des radicaux alkyles linéaires ou ramifiés qui contiennent ensemble au moins 14 atomes de carbone et où R¹ contient 2 atomes de carbone de plus que R².

9. Procédé selon la revendication 8 où R est un radical de formule :

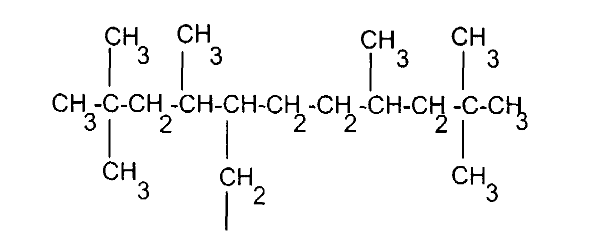

10. Procédé selon la revendication 1 ou la revendication 2 où le complexe organique est un produit de traitement d'une solution aqueuse de sel métallique avec une résine chélatante.

11. Procédé selon l'une quelconque des revendications 1 à 10 où la solution aqueuse faiblement acide de chlorure d'ammonium a une teneur en chlorure au moins 5 fois molaire.

12. Procédé selon l'une quelconque des revendications 1 à 11 où le complexe organique est un complexe d'antimoine ou de bismuth.
